# EUROPEAN PATENT SPECIFICATION

(11) **EP 3 910 269 B1**
(45) Date of publication and mention of the grant of the patent: **10.07.2024**
(21) Application number: 21163568.5
(22) Date of filing: 18.03.2021
(51) Int. Cl.: F25D 23/06

(54) **VACUUM INSULATION ASSEMBLY FOR AN APPLIANCE**
VAKUUMISOLATIONSPANEEL FÜR EIN GERÄT
PANNEAU D'ISOLATION À VIDE POUR UN APPAREIL

(30) Priority: 13.05.2020 US 202015930592
(43) Date of publication of application: 17.11.2021
(73) Proprietor: Whirlpool Corporation, Benton Harbor, MI 49022 (US)
(72) Inventor: Raskar, Devidas B., 21024 Cassinetta di Biandronno (VA) (IT)
(74) Representative: PGA S.p.A., Milano, Succursale di Lugano

(56) References cited:
- EP-A2- 1 258 343
- WO-A1-98/29309
- WO-A2-2011/016698
- DE-A1- 102018 006 150
- JP-A- S62 215 194
- JP-U- S58 127 289
- US-A- 5 500 305

## Description

### FIELD

*The present device generally relates to a stiffening structure for an appliance, and more specifically to a stiffening structure for a vacuum insulation assembly for an appliance.*

### BACKGROUND

*Insulation is commonly disposed within the walls of refrigerator appliances. Vacuum insulation assemblies may improve insulation properties for refrigerator appliances. Stiffening material may be used to reinforce refrigerator appliances when vacuum insulation assemblies are used.* Document EP1258343A2 discloses a vacuum heat-insulating panel including a vacuum core element of non-permeable honeycomb structure and a surface element bonded thereto by fusing an air-permeable bonding element, the air-permeable bonding element being a woven or unwoven cloth made of fibrous adhesive of thermoplastic resin.

### SUMMARY

*In at least one aspect, a vacuum insulation assembly for an appliance includes* an assembly as defined in claim 1.

*In at least another aspect, a vacuum insulation assembly for an appliance includes first and second panels defining a cavity. A vacuum insulation material is positioned within the cavity. A stiffening material is coupled to an inner surface of one of the first and second panels. The stiffening material includes a polymer layer configured to expand when heat is applied. A mesh layer is coupled to the polymer layer.*

*In at least another aspect, a method of reinforcing a vacuum insulation includes a step of selecting a heat-activated stiffening material. Another step includes positioning the heat-activated stiffening material on one or more of an inner surface of a first panel, an outer surface of the first panel, an inner surface of a second panel, and an outer surface of the second panel. The method further includes a step of applying heat to activate the stiffening material. Another step includes coupling the first panel with the second panel to define a cavity. The* method also includes a step of removing air from the cavity to form at least a partial vacuum therein.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a side perspective view of a refrigerator appliance having a door, according to various examples;
FIG. 2 is a side perspective view of a vacuum insulation assembly for the refrigerator appliance of FIG. 1;
FIG. 3A is a partial cross-sectional view of the vacuum insulation assembly of FIG. 2 taken along line III-III and including a stiffening material, according to various examples;
FIG. 3B is a partial cross-sectional view of the vacuum insulation assembly of FIG. 2 taken along line III-III and including a stiffening material, according to various examples;
FIG. 4A is a side perspective view of an inner surface of a panel of the vacuum insulation assembly of FIG. 2 including a stiffening material, according to various examples, not part of the invention;
FIG. 4B is a side perspective view of an inner surface of a panel of the vacuum insulation assembly of FIG. 2 including a stiffening material, according to embodiments of the invention;
FIG. 4C is a side perspective view of an inner surface of a panel of the vacuum insulation assembly of FIG. 2 including a stiffening material, according to various examples not part of the invention; and
FIG. 5 a flow diagram for a method for reinforcing a vacuum insulation assembly, according to various examples.

### DETAILED DESCRIPTION OF EMBODIMENTS

The present illustrated embodiments reside primarily in combinations of method steps and apparatus components related to a vacuum insulation assembly for an appliance including a stiffening material for reinforcing the vacuum insulation assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

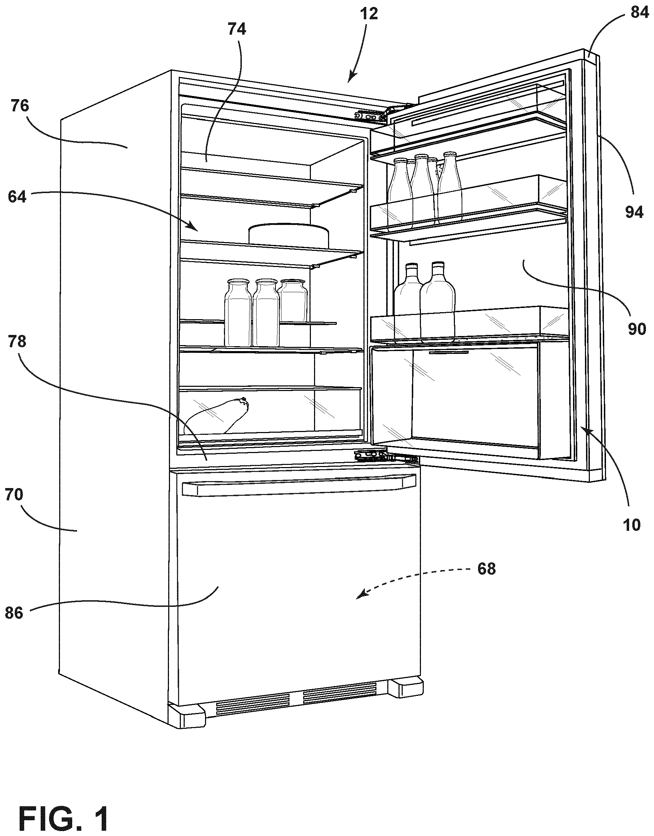

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a . . . " does not, without more constraints, preclude the existence of additional identical elements in the process, method, article, or apparatus that comprises the element.

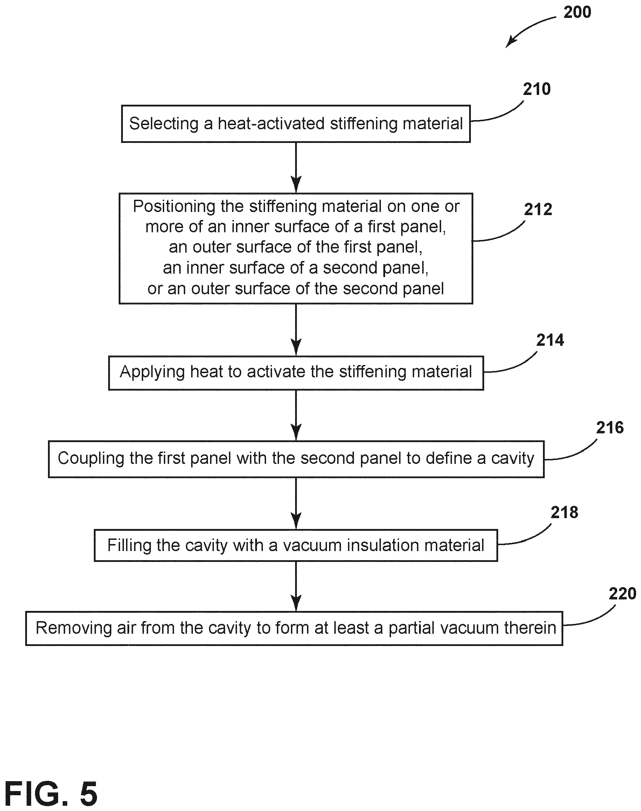

Referring to FIGS. 1-5, reference numeral 10 generally designates a vacuum insulation assembly for a refrigerator appliance 12. The vacuum insulation assembly 10 includes a plurality of panels 14, 16 defining a cavity 18. Each of the plurality of panels 14, 16 includes an inner surface 20, 22. A port opening 24 is defined by one of the plurality of panels 14, 16 and is in communication with the cavity 18. A vacuum insulation material 26 is positioned within the cavity 18. A stiffening material 28 is coupled to the inner surface 20, 22 of one or more of the plurality of panels 14, 16. The stiffening material 28 includes a polymer layer 30 configured to adhere to the inner surface 20, 22 when the stiffening material 28 is heated. A mesh layer 32 positioned over the polymer layer 30.

Referring now to FIG. 1, the refrigerator appliance 12 is shown having a refrigerator compartment 64 configured to refrigerate consumables and a freezer compartment 68 configured to freeze consumables during normal use. In some instances, the refrigerator appliance 12 may have a cabinet 70 and a liner 74 within the cabinet 70 to define the refrigerator compartment 64 and the freezer compartment 68. The cabinet 70 may further include a wrapper 76 spaced apart from the liner 74. A mullion 78 may separate the refrigerator compartment 64 and the freezer compartment 68. FIG. 1 generally shows a refrigerator of the bottom-mount type, but it is understood that this disclosure could apply to any type of refrigerator, such as a side-by-side, a two-door bottom-mount, or a top-mount type refrigeration unit.

The refrigerator appliance 12 may have one or more door assemblies 84, 86 that provide selective access to the interior volume of the refrigerator appliance 12 where consumables may be stored. As shown, the refrigerator compartment door assembly 84 selectively closes the refrigerator compartment 64. The freezer compartment door assembly 86 may be a sliding door assembly and may selectively close the freezer compartment 68. It is appreciated that the refrigerator compartment 64 may have a single door assembly 84 or a pair of door assemblies 84. It is also appreciated that the freezer compartment 68 may have a hinged door assembly rather than a sliding assembly, as shown.

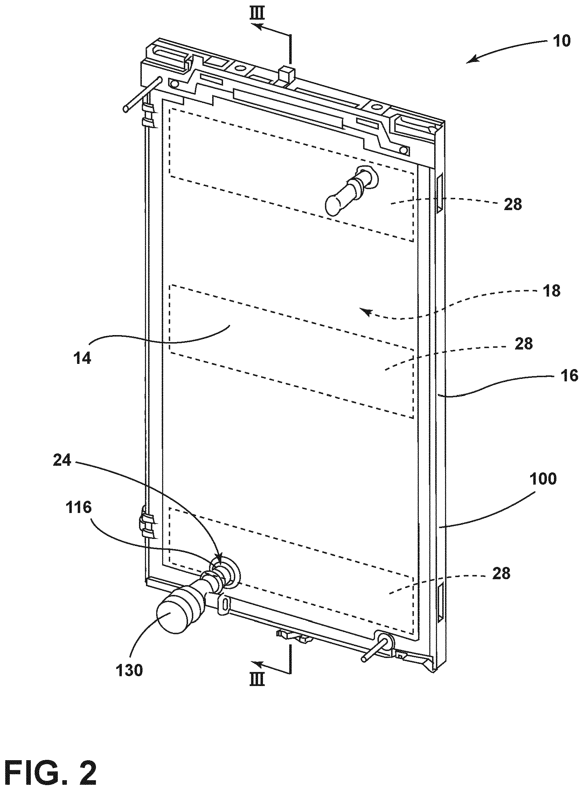

Referring now to FIG. 2, the vacuum insulation assembly 10 is illustrated including a first panel 14 and a second panel 16 defining the cavity 18. It will be understood that the vacuum insulation assembly 10 illustrated is exemplary only and that the vacuum insulation assembly 10 may be any size or shape and may be configured to be used in any part of the appliance 12 including, but not limited to, a wall of the cabinet 70, the refrigerator compartment door assembly 84, or the freezer compartment door assembly 86.

Referring now to FIGS. 1 and 2, the refrigerator compartment door assembly 84 includes an inner door liner 90 and an outer panel 94. Where the vacuum insulation assembly 10 is positioned within the refrigerator compartment door assembly 84, the vacuum insulation assembly 10 may be positioned between the inner door liner 90 and the outer panel 94 or may be integrally formed with the refrigerator compartment door assembly 84. For example, the first panel 14 may be defined the inner door liner 90 of the refrigerator compartment door assembly 84, and the second panel 16 may be defined by the outer panel 94 of the refrigerator compartment door assembly 84. It will be understood that the vacuum insulation assembly 10 may be similarly disposed within the freezer compartment door assembly 86 or within the cabinet 70 (e.g., positioned between the liner 74 and the wrapper 76 or integrally formed with the liner 74 and the wrapper 76).

Referring now to FIGS. 2-3B, one of the first panel 14 and the second panel 16 may include a perimeter wall 100 extending along at least part of the vacuum insulation assembly 10 to define a periphery of the vacuum insulation assembly 10. The first panel 14 includes a first inner surface 20 and a first outer surface 110, and the second panel 16 includes a second inner surface 22 and a second outer surface 112. The first and second inner surfaces 20, 22 are positioned to oppose one another to define the cavity 18. The cavity 18 is further enclosed by the perimeter wall 100 of the first or second panel 14, 16.

The first panel 14 defines the port opening 24 in communication with the cavity 18. As illustrated, the port opening 24 is generally circular and is configured to be operably coupled to a vacuum (not shown) and/or a vacuum port 130 (FIG. 2). The port opening 24 may be surrounded by and at least partially defined by a rim 116. The rim 116 extends outward from the outer surface 110 of the first panel 14 and may be, for example, tapered, squared, or beveled.

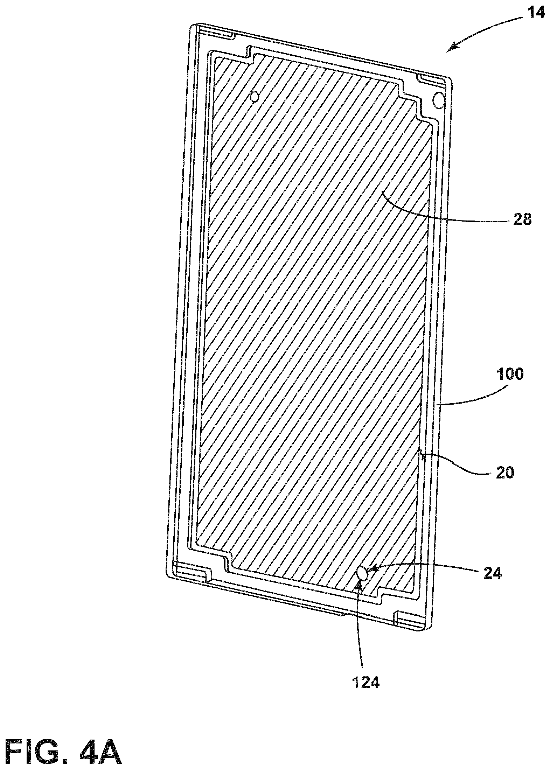

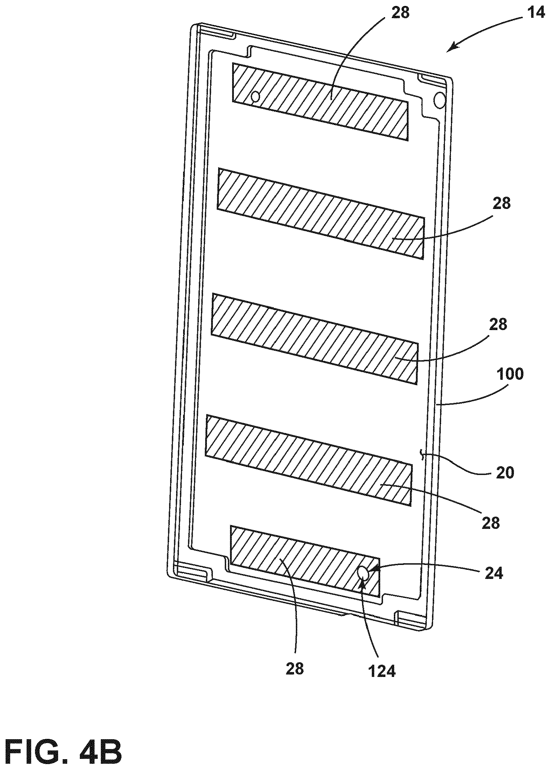

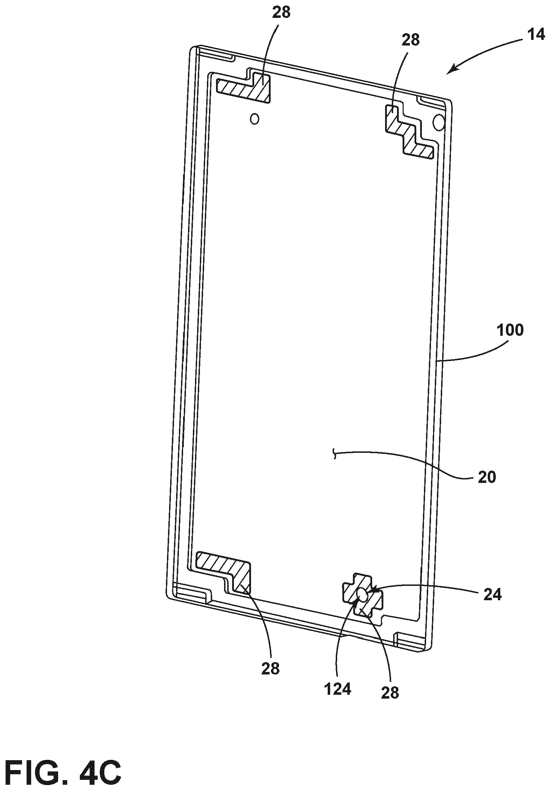

Referring still to FIGS. 2-3B, the stiffening material 28 is illustrated, according to various examples, coupled to the inner surface 20 of the first panel 14. As illustrated in FIGS. 4A-4C, the stiffening material 28 may be coupled to the inner surface 20 as a sheet (FIG.4A , example not part of the invention), as strips (FIG. 2 and FIG. 4B, embodiments of the invention), or as pieces cut as irregular shapes for specific areas (FIG. 4C, example not part of the invention). However, it will be understood that the embodiments illustrated are exemplary only and that the stiffening material 28 may be applied in any pattern to any surface of either of the first and second panels 14, 16 including, but not limited to, the inner surface 22 of the second panel 16, the outer surface 110 of the first panel 14, the outer surface 112 of the second panel 16, the perimeter wall 100, or any combination thereof, without departing from the scope of the present disclosure. The location, shape, and orientation of the stiffening material 28 is selected based on various factors, including, for example, the material forming the respective panel 14, 16, the method of removing air from the cavity 18 to form a vacuum, and/or the anticipated use of the vacuum insulation assembly 10.

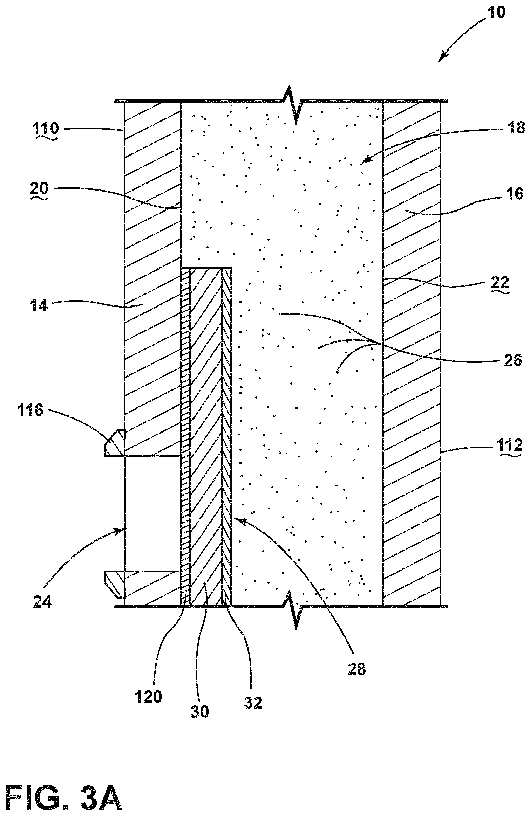

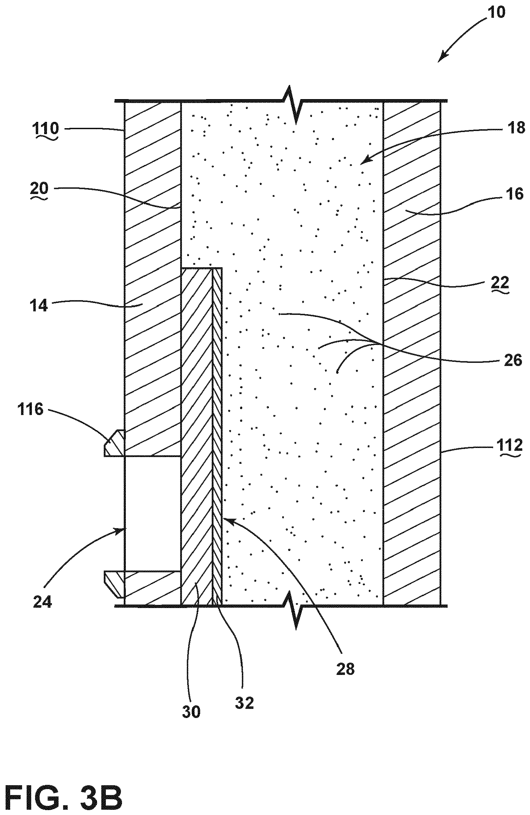

Referring now to FIGS. 3A and 3B, the stiffening material 28 is illustrated as a strip positioned to cover the port opening 24 of the first panel 14. The stiffening material 28 includes the polymer layer 30 and the mesh layer 32 and may be configured as a composite stiffening material. The polymer layer 30 is a heat-activated polymer. Heat-activated polymers are polymers that experience a change in a physical property (e.g., stiffness) when exposed to a predetermined temperature. For example, a heat-activated polymer may be configured to expand when heated at a predetermined temperature (e.g., between about 200°F and about 300°F, between about 225°F and 275°F, or any single temperature or range of temperatures therein) for a predetermined time (e.g., between about 10 minutes and 35 minutes, between about 15 minutes and 30 minutes, or any single time span or range of time spans therein). When heat is applied to the stiffening material 28 and the polymer layer 30 expands, the polymer layer 30 may increase in stiffness, or stiffen, to reinforce the first panel 14. The increase in stiffness may be a product of an increased moment of inertia. The polymer layer 30 may further solidify or may become porous while providing reinforcement to the first panel 14. The polymer layer 30 may be formed of a material selected, such that the polymer layer 30 is air permeable when the polymer layer 30 is activated.

The mesh layer 32 may be integrally formed with or coupled to the polymer layer 30. The mesh layer 32 is formed of an air-permeable material such as, but not limited to, resin coat glass and/or mineral cloth. As illustrated, the mesh layer 32 is exposed within the cavity 18 of the vacuum insulation assembly 10 when the stiffening material 28 is coupled to the inner surface 20 of the first panel 14. In other words, the polymer layer 30 is disposed between the mesh layer 32 and the inner surface 20 of the first panel 14.

As illustrated in FIG. 3A, the polymer layer 30 may further be coupled to an adhesive layer 120. The adhesive layer 120 may be configured to couple the polymer layer 30 with the inner surface 20 of the first panel 14. In various examples, a removable release layer may be positioned over the adhesive layer 120 and may be removed prior to coupling the stiffening material 28 with the panel 14. The adhesive layer 120 may be formed of any adhesive configured to allow the heat activation of the polymer layer 30. In some examples, the adhesive layer 120 may be selected to be air permeable, such that air may be pulled through the stiffening material 28 when the stiffening material 28 is positioned over the port opening 24. Alternatively, as illustrated in FIG. 3B, the polymer layer 30 may be configured to adhere to the inner surface 20 of the first panel 14 when activated, such that the polymer layer 30 is directed coupled to the inner surface 20. It further contemplated that any combination of self-adhesion and an adhesive layer 120 may be used without departing from the scope of the present disclosure.

Referring now to FIGS. 4A-4C, the first panel 14 is illustrated with the stiffening material 28 positioned in various patterns. As illustrated in FIG. 4A, an example not part of the invention, the stiffening material 28 may be positioned as a sheet across all or a portion of the inner surface 20 of the first panel 14. In other embodiments according to the invention, as illustrated in FIG. 4B, the stiffening material 28 may be positioned in strips horizontally, as shown, vertically, diagonally, or in any pattern. The stiffening material 28 may be formed as rectangular strips having any dimension without departing from the scope of the present disclosure. The stiffening material 28 may include the strips with spacing that is even or uneven. In still other examples not part of the invention, as illustrated in FIG. 4C, the stiffening material 28 may be positioned in irregular shapes and/or as outlines (e.g., a zig-zag shape, a symmetrical shape, an asymmetrical shape, a corner outline, etc.) and may be positioned in various locations on the inner surface 20 of the first panel 14.

Referring still to FIGS. 4A-4C, the stiffening material 28 may be provided in precut strips and/or shapes, or the stiffening material 28 may be cut prior to activation of the polymer layer 30 (FIGS. 3A and 3B). As previously discussed, the stiffening material 28 may be positioned to cover the port opening 24. Alternatively, as illustrated in FIGS. 4A-4C, the stiffening material 28 may include one or more cutouts 124 shaped to align with the port opening 24 and any other openings defined by the first panel 14.

Referring again to FIGS. 1-5, a method 200 of reinforcing the vacuum insulation assembly 10 may be provided. The method 200 may include a step 210 of selecting a heat-activated stiffening material 28 to be used for reinforcing first and second panels 14, 16 that define a cavity 18 of the vacuum insulation assembly 10. The stiffening material 28 is configured to be air permeable when activated. The step 210 of selecting the stiffening material 28 may include selecting a polymer layer 30, selecting a mesh layer 32, selecting an adhesive layer 120, and/or determining the properties of one or all of the layers 30, 32, 120.

The step 210 of selecting the stiffening material 28 may include selecting the stiffening material 28 based on the amount of reinforcement being used and the location selected for the stiffening material 28. For example, where the first or second panel 14, 16 shows deformation at a first portion of the panel 14, 16 when air is removed from the cavity 18 (e.g., vacuum bow), the stiffening material 28 may be selected to provide a degree of reinforcement over the first portion of the panel 14, 16. Where the panel 14, 16 shows a different degree of deformation at a second portion of the panel 14, 16, the stiffening material 28 may be selected to provide a degree of reinforcement over the second portion of the panel 14, 16. It is contemplated that more than one stiffening material 28 may be selected for use on a single panel 14, 16 of the vacuum insulation assembly 10.

The method 200 may include a further step 212 of positioning the stiffening material 28 on one or more of an inner surface 20 of the first panel 14, an inner surface 22 of the second panel 16, an outer surface 110 of the first panel 14, or an outer surface 112 of the second panel 16. In various examples, the step 212 may including coupling the stiffening material 28 with the respective surface 20, 22, 110, 112 with the adhesive layer 120. In other examples, the method 200 may include a step 214 of applying heat to activate the stiffening material 28. When heat is applied, the polymer layer 30 of the stiffening material 28 is configured to activate and expand. The activation and expansion of the polymer layer 30 may be configured to couple the stiffening material 28 with the respective surface 20, 22, 110, 112. The activation and expansion of the polymer layer 30 may further increase the stiffness of the stiffening material 28, providing reinforcement to the respective panel 14, 16 and/or may render the stiffening material 28 air permeable.

It will be understood that the stiffening material 28 may be selected as a single sheet or pre-cut strips and/or shapes without departing from the scope of the present disclosure. The step 212 of positioning the stiffening material 28 on one or more of the surfaces 20, 22, 110, 112 of the panels 14, 16 may further include configuring the stiffening material 28 to cover a portion of the respective surface 20, 22, 110, 112. The portion may define a predetermined pattern (e.g., a plurality of spaced-apart strips) or may define any other shape (see FIGS. 4A-4C). The portion may further or alternatively define a periphery of the panel 14, 16, a periphery any openings defined by the panel (e.g., a port opening 24), or a periphery any other feature of the panel 14, 16. Where the stiffening material 28 is selected as a single sheet, the step 212 of positioning the stiffening material 28 on one or more of the surfaces 20, 22, 110, 112 of the panels 14, 16 may further include cutting and/or sizing the stiffening material 28 without departing from the scope of the present disclosure.

Further, the step 212 of positioning the stiffening material 28 may further include positioning the stiffening material over the port opening 24 defined by the first panel 14. The stiffening material 28 may be positioned over any other opening defined by either of the panels 14, 16. It will further be understood that the stiffening material 28 may be positioned on and/or coupled to a perimeter wall 100 of the vacuum insulation assembly 10 and may be positioned over or around any opening defined therein.

The method 200 may further include a step 216 of coupling the first panel 14 with the second panel 16 to define the cavity 18. In various examples, the first panel 14 may be a panel of the door assembly 84, 86 or the cabinet 70 of the appliance 12. In other examples, the first panel 14 may be a separate panel where the vacuum insulation assembly 10 is configured to fit within the door assembly 84, 86 or a wall of the cabinet 70. The method 200 further includes a step 218 of filling the cavity 18 with a vacuum insulation material 26. The vacuum insulation material 26 may be a powdered insulation material and may be configured to be retained within the cavity 18 by the positioning of the stiffening material 28 over the port opening 24 and/or over any other openings of the panels 14, 16 or perimeter wall 100 of the vacuum insulation assembly 10. Another step 220 may include removing air from the cavity 18 to form a vacuum therein. The air may be removed through a vacuum port 130 (FIG. 2) coupled to the port opening 24. It will be understood that the steps of the method 200 may be performed in any order, including being performed simultaneously, without departing from the scope of the present disclosure.

Referring still to FIGS. 1-5, use of the stiffening material 28 to provide reinforcement to the vacuum insulation assembly 10 may allow various portions of the panels 14, 16 to be reinforced without large manufacturing adjustments. The stiffening material 28 may be configured as a tape or adhesive film and may be placed in any location and/or cut to or manufactured into any shape, depending on the use of the vacuum insulation assembly 10. The stiffening material 28 may further allow reinforcement of metal panels (e.g., the first and second panels 14, 16) to prevent deformation such as vacuum bowing when air is removed to define at least a partial vacuum within the cavity 18.

## Claims

1. A vacuum insulation assembly (10) for an appliance (12), comprising:
a plurality of panels (14, 16) coupled to one another and spaced apart from one another to define a cavity (18) therebetween, each of the plurality of panels (14, 16) including an inner surface (20, 22);
a vacuum insulation material (26) positioned within the cavity (18); and
a stiffening material (28) coupled to one or more panels (14, 16) of the plurality of panels (14, 16),
wherein the stiffening material (28) includes:
a polymer layer (30) configured to adhere to the inner surface (20, 22) of the one or more panels (14, 16) of the plurality of panels (14, 16) when the stiffening material (28) is heated, and
a mesh layer (32) positioned over the polymer layer (30),
**characterised in that** the stiffening material (28) is provided in strips and coupled to the inner surfaces (20, 22) of the one or more panels (14, 16) of the plurality of panels (14, 16) in a predetermined pattern formed by the strips of the stiffening material (28).

2. The vacuum insulation assembly (10) of claim 1, wherein the polymer layer (30) solidifies when the stiffening material (28) is heated.

3. The vacuum insulation assembly (10) of any one of claims 1-2, including a port opening (24) defined by one of the panels (14, 16) of the plurality of panels (14, 16).

4. The vacuum insulation assembly (10) of claim 3, wherein the port opening (24) is in communication with the cavity (18).

5. The vacuum insulation assembly (10) of any one of claims 3-4, wherein the stiffening material (28) is positioned over the port opening (24).

6. The vacuum insulation assembly (10) of any one of claims 1-5, wherein the stiffening material (28) is air permeable.

7. The vacuum insulation assembly (10) of any one of claims 1-6, wherein the vacuum insulation material (26) comprises a powdered insulation material (26).

8. The vacuum insulation assembly (10) of claim 7, wherein the stiffening material (28) retains the powdered insulation material (26) within the cavity (18) during an evacuation (220) of the cavity (18).

9. The vacuum insulation assembly (10) of any one of claims 1-8, wherein the polymer layer (30) is porous when the polymer layer (30) expands as heat is applied to the polymer layer (30).

10. The vacuum insulation assembly (10) of any one of claims 1-9, wherein the stiffening material (28) includes an adhesive layer (120) coupled to the polymer layer (30) opposite the mesh layer (32), wherein the adhesive layer (120) is configured to couple the stiffening material (28) to the one or more panels (14, 16) of the plurality of panels (14, 16).

11. The vacuum insulation assembly (10) of claim 10, wherein the stiffening material (28) is adhered to inner surfaces (20, 22) and outer surfaces (110, 112) of the one or more panels (14, 16) of the plurality of panels (14, 16).

## Patentansprüche

1. Vakuumisolationsanordnung (10) für ein Gerät (12), aufweisend:
eine Vielzahl von Flächenelementen (14, 16), die miteinander gekoppelt und voneinander beabstandet sind, um einen Hohlraum (18) zwischen sich zu definieren, wobei jedes der Vielzahl von Flächenelementen (14, 16) eine Innenfläche (20, 22) aufweist;
ein Vakuumisolationsmaterial (26), das in dem Hohlraum (18) positioniert ist; und
ein Versteifungsmaterial (28), das mit einem oder mehreren Flächenelementen (14, 16) der Vielzahl von Flächenelementen (14, 16) gekoppelt ist,
wobei das Versteifungsmaterial (28) aufweist:
eine Polymerschicht (30), die derart konfiguriert ist, dass sie an der Innenfläche (20, 22) des einen oder der mehreren Flächenelemente (14, 16) der Vielzahl von Flächenelementen (14, 16) haftet, wenn das Versteifungsmaterial (28) erhitzt wird, und
eine Netzschicht (32), die über der Polymerschicht (30) angeordnet ist,
**dadurch gekennzeichnet, dass** das Versteifungsmaterial (28) in Streifen vorgesehen und mit den Innenflächen (20, 22) des einen oder der mehreren Flächenelemente (14, 16) der Vielzahl von Flächenelementen (14, 16) in einem vorbestimmten Muster gekoppelt ist, das durch die Streifen des Versteifungsmaterials (28) gebildet wird.

2. Vakuumisolationsanordnung (10) nach Anspruch 1, wobei sich die Polymerschicht (30) verfestigt, wenn das Versteifungsmaterial (28) erhitzt wird.

3. Vakuumisolationsanordnung (10) nach einem der Ansprüche 1 bis 2, mit einer Anschlussöffnung (24), die von einem der Flächenelemente (14, 16) der Vielzahl von Flächenelementen (14, 16) definiert wird.

4. Vakuumisolationsanordnung (10) nach Anspruch 3, wobei die Anschlussöffnung (24) mit dem Hohlraum (18) in Verbindung steht.

5. Vakuumisolationsanordnung (10) nach einem der Ansprüche 3 bis 4, wobei das Versteifungsmaterial (28) über der Anschlussöffnung (24) positioniert ist.

6. Vakuumisolationsanordnung (10) nach einem der Ansprüche 1 bis 5, wobei das Versteifungsmaterial (28) luftdurchlässig ist.

7. Vakuumisolationsanordnung (10) nach einem der Ansprüche 1 bis 6, wobei das Vakuumisolationsmaterial (26) ein pulverförmiges Isolationsmaterial (26) aufweist.

8. Vakuumisolationsanordnung (10) nach Anspruch 7, wobei das Versteifungsmaterial (28) das pulverförmige Isolationsmaterial (26) während einer Evakuierung (220) des Hohlraums (18) innerhalb des Hohlraums (18) zurückhält.

9. Vakuumisolationsanordnung (10) nach einem der Ansprüche 1 bis 8, wobei die Polymerschicht (30) porös ist, wenn sich die Polymerschicht (30) ausdehnt, während Wärme auf die Polymerschicht (30) aufgebracht wird.

10. Vakuumisolationsanordnung (10) nach einem der Ansprüche 1 bis 9, wobei das Versteifungsmaterial (28) eine Klebstoffschicht (120) aufweist, die mit der Polymerschicht (30) gegenüber der Netzschicht (32) gekoppelt ist, wobei die Klebstoffschicht (120) derart konfiguriert ist, dass sie das Versteifungsmaterial (28) mit dem einen oder den mehreren Flächenelementen (14, 16) der Vielzahl von Flächenelementen (14, 16) verbindet.

11. Vakuumisolationsanordnung (10) nach Anspruch 10, wobei das Versteifungsmaterial (28) an Innenflächen (20, 22) und Außenflächen (110, 112) des einen oder der mehreren Flächenelemente (14, 16) der Vielzahl von Flächenelementen (14, 16) haftet.

## Revendications

1. Ensemble d'isolation sous vide (10) pour un appareil (12), comprenant :
une pluralité de panneaux (14, 16) accouplés l'un à l'autre et espacés à l'écart l'un de l'autre pour définir une cavité (18) entre eux, chacun de la pluralité des panneaux (14, 16) comprenant une surface interne (20, 22) ;
un matériau d'isolation sous vide (26) positionné à l'intérieur de la cavité (18) ; et
un matériau de rigidification (28) accouplé à un ou plusieurs panneaux (14, 16) de la pluralité de panneaux (14, 16),
le matériau de rigidification (28) comprenant :
une couche polymère (30) configurée pour adhérer à la surface interne (20, 22) du un ou plusieurs panneaux (14, 16) de la pluralité de panneaux (14, 16) lorsque le matériau de rigidification (28) est chauffé, et
une couche de maillage (32) positionnée sur la couche polymère (30),
**caractérisé en ce que** le matériau de rigidification (28) est fourni en bandes et accouplé aux surfaces internes (20, 22) des un ou plusieurs panneaux (14, 16) de la pluralité de panneaux (14, 16) selon un motif prédéterminé formé par les bandes du matériau de rigidification (28).

2. Ensemble d'isolation sous vide (10) selon la revendication 1, la couche polymère (30) se solidifiant lorsque le matériau de rigidification (28) est chauffé.

3. Ensemble d'isolation sous vide (10) selon l'une quelconque des revendications 1 à 2, comprenant une ouverture d'orifice (24) définie par l'un des panneaux (14, 16) de la pluralité de panneaux (14, 16).

4. Ensemble d'isolation sous vide (10) selon la revendication 3, l'ouverture d'orifice (24) se trouvant en communication avec la cavité (18).

5. Ensemble d'isolation sous vide (10) selon l'une quelconque des revendications 3 à 4, le matériau de rigidification (28) étant positionné sur l'ouverture d'orifice (24).

6. Ensemble d'isolation sous vide (10) selon l'une quelconque des revendications 1 à 5, le matériau de rigidification (28) étant perméable à l'air.

7. Ensemble d'isolation sous vide (10) selon l'une quelconque des revendications 1 à 6, le matériau d'isolation sous vide (26) comprenant un matériau d'isolation pulvérulent (26).

8. Ensemble d'isolation sous vide (10) selon la revendication 7, le matériau de rigidification (28) maintenant le matériau d'isolation pulvérulent (26) à l'intérieur de la cavité (18) durant une évacuation (220) de la cavité (18).

9. Ensemble d'isolation sous vide (10) selon l'une quelconque des revendications 1 à 8, la couche polymère (30) étant poreuse lorsque la couche polymère (30) s'expanse lorsque de la chaleur est appliquée à la couche polymère (30).

10. Ensemble d'isolation sous vide (10) selon l'une quelconque des revendications 1 à 9, le matériau de rigidification (28) comprenant une couche adhésive (120) accouplée à la couche polymère (30) opposée à la couche de maillage (32), la couche adhésive (120) étant configurée pour accoupler le matériau de rigidification (28) à l'un ou plusieurs panneaux (14, 16) de la pluralité de panneaux (14, 16).

11. Ensemble d'isolation sous vide (10) selon la revendication 10, le matériau de rigidification (28) adhérant aux surfaces internes (20, 22) et aux surfaces externes (110, 112) du un ou plusieurs panneaux (14, 16) de la pluralité de panneaux (14, 16).
